# EUROPÄISCHE PATENTSCHRIFT

(11) **EP 2 164 818 B1**
(45) Veröffentlichungstag und Bekanntmachung des Hinweises auf die Patenterteilung: **22.10.2014**
(21) Anmeldenummer: 08759240.8
(22) Anmeldetag: 13.06.2008
(51) Int. Cl.: C04B 28/26, C04B 111/00, C04B 111/52, C04B 28/18, C04B 111/28

(54) **KERAMISCHE BRANDSCHUTZPLATTE UND VERFAHREN ZU DEREN HERSTELLUNG**
CERAMIC FIRE PROTECTION PANEL AND METHOD FOR PRODUCING THE SAME
PLAQUE COUPE-FEU EN CÉRAMIQUE ET PROCÉDÉ DE FABRICATION CORRESPONDANT

(30) Priorität: 15.06.2007 DE 102007027653
(43) Veröffentlichungstag der Anmeldung: 24.03.2010
(73) Patentinhaber: Puckelwaldt, Horst, 14050 Berlin (DE)
(72) Erfinder: PUCKELWALDT, Horst, 64009 KUWAIT (KW)
(74) Vertreter: Tiesmeyer, Johannes
(86) Internationale Anmeldenummer: PCT/EP2008/004785
(87) Internationale Veröffentlichungsnummer: WO 2008/151825

(56) Entgegenhaltungen:
- EP-A- 0 007 585
- EP-A- 0 404 196
- WO-A-93/25492
- WO-A-96/34839
- AU-B2- 428 565
- DE-A1- 3 641 823
- US-A1- 2002 166 479

## Beschreibung

Die vorliegende Erfindung betrifft ein hitzebeständiges Material auf Basis von Calciumhydrosilikat, ein Verfahren zu dessen Herstellung und die Verwendung des Materials als Brandschutz- oder Isolierungsmaterial.

Die Verwendung von Calciumhydrosilikat-basierten Materialien zur Wärmeisolierung und als Brandschutzmaterial ist im Fachbereich bereits bekannt. So beschreibt das europäische Patent EP 0 220 219 ein Calciumhydrosilikatmaterial, das im Wesentlichen eine faserartige Tobermoritstruktur aufweist. Das Material ist durch ein Hydrothermalverfahren aus einer Zusammensetzung, welche gelöschten Kalk und SiO₂ in einem Verhältnis von 0,73 bis 0,76 Gew.-% sowie anorganische oder organische Fasern enthält, erhältlich. Ein Nachteil des in EP 0 220 219 beschriebenen Materials ist jedoch seine relativ geringe mechanische Festigkeit. Die Druckfestigkeit liegt bei etwa 1,4 bis 1,9 MPa und die Biegefestigkeit bei maximal 0,98 MPa.

Die hohen Anforderungen, die an die mechanische Festigkeit von Baumaterialien gestellt werden, machten eine Weiterentwicklung des Materials erforderlich. Um ein Calciumhydrosilikat-Tobermorit-basiertes, hitzebeständiges Material mit verbesserter Festigkeit zu erhalten, wurde in EP 0 404 196 für die Herstellung ein Gemisch mit veränderter Zusammensetzung verwendet, worin Kalkhydrat und Quarzpulver im Verhältnis CaO zu SiO₂ von 0,60 bis 0,735 Gew.-% enthalten sind. Das daraus hergestellte Material besitzt eine Biegefestigkeit von 0,91 MPa und bei Raumtemperatur eine Druckfestigkeit von 1,6 MPa.

Die Materialien des Standes der Technik sind im Hinblick auf ihre bauphysikalischen Eigenschaften aber noch immer unzureichend. Insbesondere bei länger andauernder Hitzeeinwirkung nimmt die Festigkeit der beschriebenen Brandschutzmaterialien stark ab.

Es war daher das Ziel der vorliegenden Erfindung, ausgehend von den bekannten Materialien ein hitzebeständiges Material mit besserer Hitzebeständigkeit und verbesserten bauphysikalischen Eigenschaften bereitzustellen.

Unter dieser Zielsetzung wurde herausgefunden, dass ein hitzebeständiges Material mit hervorragenden mechanischen Eigenschaften erhalten werden kann, wenn als Ausgangsmaterial ein Gemisch verwendet wird, das zusätzlich zu den im Stand der Technik beschriebenen Komponenten Natriumsilikat enthält.

Die Erfindung betrifft in einem ersten Aspekt ein Verfahren zur Herstellung eines hitzebeständigen Materials umfassend die Schritte:
i) Bereitstellen eines wässrigen Gemischs, welches ein Alkalimetallsalz von Carboxymethylzellulose, SiO₂, Ca(OH)₂, Natriumsilikat und organische Fasern enthält;
ii) Erhitzen des Gemischs für 14 bis 28 Stunden bei einem Druck von gesättigtem Wasserdampf von 11 bis 13 bar auf eine Temperatur von 190 bis 200°C;
iii) Trocknen des in ii) erhaltenen Materials bei einer Temperatur von höchstens 250°C.

Das so hergestellte Material weist im Wesentlichen eine korallenähnliche Tobermoritstruktur auf. Es wurde erfindungsgemäß herausgefunden, dass die Zugabe von Natriumsilikat zu dem Gemisch aus Schritt i) die Bildung der Tobermoritstruktur begünstigt. Das wasserlösliche Natriumsilikat reagiert in Kombination mit Calciumhydroxid zu wasserunlöslichem Calciumsilikat, welches die Oberfläche der organischen Fasern bedeckt. Bei der anschließenden Hydrothermalbehandlung in Schritt ii) fungiert das so gebildete Calciumsilikat als Kristallisationskeim für die weitere Ausbildung von Calciumhydrosilikat. Es bildet sich dabei eine besonders regelmäßige, korallenähnliche Tobermoritstruktur aus. Diese Struktur zeichnet sich durch ein hohes Porenvolumen und gleichzeitig eine überraschend hohe Festigkeit aus.

Die verwendete Menge an Ca(OH)₂ und SiO₂ wird vorzugsweise so gewählt, dass sie einem Gewichtsverhältnis von CaO zu SiO₂ von etwa 0,3 bis 3, bevorzugt 0,5 bis 2 oder 0,5 bis 1,3 entspricht.Beispielsweise kann das Verhältnis bei etwa 0,65 bis 0,75 liegen. SiO₂ kann beispielsweise in Form von Quarzsand zugegeben werden. Der Quarzsand kann vor der Verwendung zu einer gewünschten Partikelgrößenverteilung gemahlen werden.

Natriumsilikat kann in einer Menge von etwa 0,1 - 5 Gew.-% zugegeben werden, bevorzugt 0,1 - 1 Gew.-%, bezogen auf die Gesamtmenge der festen Bestandteile.

Das Alkalimetallsalz von Carboxymethylzellulose wird vorzugsweise in einer Menge von 0,1 bis 5 Gew.-%, bevorzugt 0,1 bis 1 Gew.-%, bevorzugt etwa 0,3 bis 0,8Gew.-%, eingesetzt, bezogen auf die Gesamtmenge aller festen Bestandteile. Besonders bevorzugt wird Natriumcarboxymethylzellulose eingesetzt.

Weiterhin enthält das wässrige Gemisch in Schritt i) organische Fasern, wie beispielsweise Zellulosefasern und/oder Holzfasern. Eine geeignete Fasermenge beträgt beispielsweise etwa 2,5 bis 7,5 % Gew.-% bezogen auf die Gesamtmenge aller festen Bestandteile, vorzugsweise 3,5 - 5,5 Gew.-%. Die organischen Fasern können beispielsweise in Form einer wässrigen Suspension zugegeben werden.

Der Wasseranteil des Ausgangsgemisches beträgt vorzugsweise mindestens 20 %, bevorzugt mindestens 40 %, 50 % oder 75 %, bezogen auf die Gesamtmasse.

In dem erfindungsgemäßen Verfahren erfolgt die Bereitstellung des wässrigen Gemischs in Schritt i) vorzugsweise indem
a) ein Gemischs aus SiO₂ und Wasser bereitgestellt wird,
b) Ca(OH)₂, Natriumsilikat, eine wässrige Lösung eines Alkalimetallsalzes von Carboxymethylzellulose und eine wässrigen Suspension organischer Fasern hinzugefügt werden, und
c) die Komponenten zu einem homogenen Gemisch vermengt werden.

Ausgehend von dem in Schritt i) erhaltenen wässrigen Gemisch wird in Schritt ii) ein Hydrothermalverfahren durchgeführt. Das wässrige Gemisch wird für 10 bis 28 Stunden, vorzugsweise 14 bis 24 Stunden, z.B. 16 bis 20 Stunden auf eine Temperatur von etwa 160 bis 250°C, bevorzugt 180 bis 220°C, vorzugsweise 190 bis 200°C erhitzt. Dieses Erhitzen erfolgt bei einem Druck von gesättigtem Wasserdampf von etwa 11 bis 13 bar, bevorzugt bei etwa 11,5 bis 12,5 bar. Für die Durchführung des Hydrothermalverfahrens in Schritt ii) kann das wässrige Gemisch in eine Form gegossen und dann unter Wasserdampfdruck z.B. in einem Autoklaven erhitzt werden. Die verwendete Form kann dabei bereits entsprechend dem beabsichtigen Verwendungszweck des späteren hitzebeständigen Materials ausgewählt werden.

Nach der Hydrothermalbehandlung wird das erhaltene Produkt ggf. aus der Form entnommen und anschließend in Schritt ii) getrocknet. Die Trocknung wird bei einer Temperatur von bis zu 300°C, beispielsweise bei 170 bis 250° C, bevorzugt etwa 180 bis 200°C durchgeführt.

Durch das oben beschriebene Verfahren wird ein Calciumhydosilikat-Material mit im Wesentlichen Tobermoritstruktur erhalten, wobei die Kristallstruktur im Vergleich zu den Materialien aus EP 0 220 219 oder EP 0 404 196 einen verbesserten Zusammenhalt aufweist. Die mechanischen Eigenschaften wie Druck- und Biegefestigkeit des Materials sind wesentlich besser als bei den Materialien des Standes der Technik, und auch nach längerer Hitzeeinwirkung behält das Material seine mechanische Festigkeit bei. Im Vergleich zu den Materialien aus EP 0 220 219 oder EP 0 404 196, die ohne Natriumsilikat hergestellt werden, wird eine etwa doppelt so hohe Druck- und Biegefestigkeit erreicht.

Um die Eigenschaften des hitzebeständigen Materials zu modifizieren, können weitere Bestandteile zugegeben werden.

Erfindungsgemäß wurde herausgefunden, dass die Zugabe von Zement zu dem Ausgangsgemisch von Schritt i) einen wesentlich verbesserten Zusammenhalt der einzelnen Komponenten bewirkt. Zement fungiert als Bindemittel und führt zu einem Calciumhydrosilikatmaterial mit noch weiter verbesserter Druck- und Biegefestigkeit.

Chemisch gesehen besteht Zement aus etwa 58 bis 66% Calciumoxid (CaO), 18 bis 26% Siliciumdioxid (SiO₂), 4 bis 10% Aluminiumoxid (Al₂O₃) und 2 bis 5% Eisenoxid (Fe₂O₃). Diese Hauptbestandteile liegen im Zement vorrangig in Form von Tricalciumsilikat (3 CaO x SiO₂), Dicalciumsilikat (2 CaO x SiO₂), Tricalciumaluminat (3 CaO x Al₂O₃) und Tetracalciumaluminatferrit (4 CaO x Al₂O₃ x Fe₂O₃) vor. Neben der chemischen und mineralogischen Zusammensetzung wirkt sich auch die Feinheit des Zements auf seine Eigenschaften aus. Im Rahmen der vorliegenden Erfindung kann ein beliebiger Zement eingesetzt werden, wie beispielsweise Portlandzement, Portlandkompositzement, Hochofenzement, Puzzolanzement oder Kompositzement. Vorzugsweise wird gemäß der vorliegenden Erfindung Portlandzement eingesetzt.

In einer bevorzugten Ausführungsform enthält das wässrige Gemisch aus Schritt i) Zement in einer Menge von vorzugsweise 0,01 bis 10 Gew.-%, bezogen auf die Gesamtmenge aller festen Bestandteile. Besonders bevorzugt beträgt die Menge an Zement 0,01 bis 5 Gew.-%, bezogen auf die Gesamtmenge aller festen Bestandteile.

Erfindungsgemäß wurde außerdem herausgefunden, dass die Hitzebeständigkeit des Calciumhydrosilikat-Materials weiter verbessert werden kann, indem zusätzlich ein oder mehrere Salze wie etwa Natrium- oder Magnesiumsalze zu dem Ausgangsgemisch hinzugefügt werden. Als besonders geeignet hat sich dabei Magnesiumchlorid erwiesen, aufgrund des hohen Siedepunkts von etwa 1412°C. Es ist aber auch möglich, andere Salze wie Magnesiumsilikat oder Magnesiumcarbonat einzusetzen.

Salz wird vorzugsweise in einem Verhältnis von 0,1 bis 10 Gew.-%, bevorzugt 0,5 bis 8 Gew.-% oder 0,1 bis 5 Gew.-%, bezogen auf die Gesamtmenge der festen Bestandteile, eingesetzt. Durch das Salz kann in dem Calciumhydrosilikat-Material eine deutlich größere Wassermenge gespeichert werden. Man nimmt an, dass das Salz Hohlräume in dem Tobermoritkristall besetzt und dass dabei Wasser in die Gerüststruktur eingebaut wird.

Außerdem kann Na(OH) zugegeben werden, vorzugsweise in einem Verhältnis von 0,01 bis 0,03 Gew.-%, bezogen auf die Gesamtmenge von Ca(OH)₂ und SiO₂.

Das erfindungsgemäße Material enthält einen relativ hohen Wasseranteil. Bei der Verwendung als Brandschutzmaterial ist die Wassermenge entscheidend, da diese im Brandfall durch die Erhitzung nach und nach abgegeben wird. Wenn das Wasser zunehmend aus der Kristallstruktur entweicht, nimmt die Stabilität des Materials immer mehr ab und es zerfällt schließlich. Bei dem erfindungsgemäßen Material ist Wasser in der Tobermoritstruktur eingeschlossen und kann auch beim Erhitzen nicht entweichen.

Das erfindungsgemäße Material zeichnet sich durch eine große Beständigkeit bei hohen Temperaturen aus und ist bis zu 1100 °C hitzebeständig. Es erfüllt die strengsten Vorschriften für Feuerschutzmaterialien, die in Wohnbauten, öffentlichen Gebäuden und öffentlichen Verkehrsmitteln verwendet werden. In diesem Zusammenhang ist auch die verbesserte Beständigkeit des Materials gegenüber starken Temperaturunterschieden vorteilhaft. In einem Abkühlungstest ist das Material selbst bei einer Abkühlung des auf 1100°C erhitzten Materials in kaltem Wasser (20°C) stabil.

Das Material besitzt außerdem universelle Isolationseigenschaften und kann daher beispielsweise als Abschirmung gegen elektromagnetische Strahlung, Wärme oder Schall dienen. Der elektrische Widerstand des erfindungsgemäßen Materials liegt bei einer Materialdicke von 0,5 mm vorzugsweise bei mindestens etwa 15 MΩ, besonders bevorzugt mindestens etwa 20 MΩ. Bei einer Dicke von 10 mm beträgt der elektrische Widerstand vorzugsweise mindestens etwa 150.000 MΩ, besonders bevorzugt mindestens etwa 200.000 MΩ.

Das Material besitzt darüber hinaus eine sehr gute mechanische Festigkeit und Schockresistenz. Bei Raumtemperatur liegt die Druckfestigkeit des Materials bei 5% Deformation in einer bevorzugten Ausführungsform bei mindestens 8,0 MPa, bevorzugt mindestens 8,4 MPa und die Druckfestigkeit bis zur maximalen Zerstörung beträgt vorzugsweise mindestens 10,0 MPa. Die Biegefestigkeit des erfindungsgemäßen Materials ist deutlich größer als die bekannter Brandschutzmaterialien des Standes der Technik. Vorzugsweise liegt die Biegefestigkeit bei Raumtemperatur bei mindestens 3,5 MPa, besonders bevorzugt mindestens 3,9 MPa.

Die Schraubentragfähigkeit des erfindungsgemäßen Materials beträgt in einer bevorzugten Ausführungsform mindestens 0,4 kN bei Raumtemperatur, besonders bevorzugt mindestens 0,47 kN oder mindestens 0,48 kN.

Das erfindungsgemäße Material ist äußert beständig gegenüber Verformung. Bei Raumtemperatur liegt der Elastizitätsmodul in einer bevorzuten Ausführungsform bei mindestens etwa 1,4 GPa, vorzugsweise mindestens 1,5 GPa oder mindestens 1,6 GPa. Auch nach längerem Erhitzen behält das Material seine Form.

Die Wärmeleitfähigkeit des Materials ist äußerst gering. Auch nach einer thermischen Behandlung bei 900°C (Erhitzen auf 900°C für 1 h) ist die Wärmeleitfähigkeit vorzugsweise kleiner als 0,2 W/K, besonders bevorzugt kleiner als etwa 0,12 W/K.

Das erfindungsgemäße Material ist nicht brennbar und beständig gegenüber direktem Kontakt mit heißen Gasen oder geschmolzenen Metallen. Gegenüber Säuren und Wasser ist es beständig.

Aufgrund der oben beschriebenen vorteilhaften physikalischen Eigenschaften des erfindungsgemäßen Materials besitzt es zahlreiche technische Anwendungsmöglichkeiten. Es kann beispielsweise als Brandschutzmaterial in Gebäuden, unterirdischen Bauwerken, Schiffen, Flugzeugen, Schienen- und Straßenfahrzeugen, in der chemischen Industrie und der Metallindustrie eingesetzt werden. Außerdem kann es aufgrund seiner isolierenden Eigenschaften auch zur Isolierung gegen Wärme, Vibrationen, Schall oder elektromagnetische Strahlen eingesetzt werden.

Die Form, in der das erfindungsgemäße Material eingesetzt wird, kann je nach beabsichtigter Anwendung beliebig variieren. Beispielsweise kann es in Form von Platten als Brandschutz an Gebäudeteilen angebracht werden. Zu diesem Zweck kann das Material auch als Block ausgebildet sein, der dann direkt an dem jeweiligen Verwendungsort wie z.B. auf der Baustelle in die benötigte Form wie etwa Platten geschnitten werden kann.

Das Material kann alternativ auch als Beschichtung auf einem Bauelement aufgebracht werden. Die Erfindung betrifft in einem weiteren Aspekt ein Verfahren zum Aufbringen einer hitzebeständigen Beschichtung, dadurch gekennzeichnet, dass ein vorstehend beschriebenes Material in partikulärem Zustand eingesetzt wird und als Gemisch mit Wasser und Kleister vermischt auf eine zu beschichtende Struktur aufgebracht wird.

Als Kleister eignet sich hierfür beispielsweise ein Natriumsalz von Carboxymethylzellulose, wie etwa Natriumcarboxymethylzellulose. Diese kann ggf. in Kombination mit einem wasserlöslichen Alkalisilikat, wie Wasserglas, verwendet werden.

Als partikuläres Material kann ein nach dem oben beschriebenen Verfahren erhaltenes Material in Form eines Granulats oder Pulvers verwendet werden. Es ist auch möglich, Altmaterialien in zerkleinerter Form zu verwenden, sodass die erfindungsgemäßen Materialien recycelt werden können. Beispielsweise können (gebrauchte) Brandschutzplatten aus dem erfindungsgemäßen Material zerkleinert und wie beschrieben mit Wasser und Kleister vermischt werden. Es ist auch möglich, hierfür den beim Zerschneiden des Materials zu Platten anfallenden Staub einzusetzen.

Das Aufbringen des wässrigen Gemischs auf der zu beschichtenden Struktur erfolgt nach einem beliebigen Verfahren. Beispielsweise kann das Material durch ein Sprüh- oder Streichverfahren aufgebracht werden. So ist es möglich, beispielsweise eine Baustruktur, wie etwa Stahl- oder Betonträger, Rohre, Leitungs- oder Lüftungskanäle, mit einer erfindungsgemäßen Beschichtung zu versehen.

Nach dem Aufbringen wird die Beschichtung vorzugsweise an Luft getrocknet.

Die vorliegende Erfindung wird durch das folgende Beispiel weiter veranschaulicht.

### Beispiel:

Ein hitzebeständiges Material wurde erhalten, indem zunächst

| | |
|---|---|
| 270,00 kg | Sandschlamm (gemahlener Quarzsand in Wasser) |
| 244,00 kg | Kalk |
| 3,20 kg | Carboxymethylzellulose (in Wasser) |
| 38,60 kg | Zellulosefasern (in Wasser) |
| 1,20 kg | Magnesiumchlorid |
| 3,00 kg | Natriumsilikat und |
| 40 kg | Portland-Zement |

mit Wasser (insgesamt 384,00 kg Wasser) vermischt wurden. Das so erhaltene wässrige Gemisch wurde dann für 20 h bei einem Druck von gesättigtem Wasserdampf von etwa 12bar auf eine Temperatur von etwa 200°C erhitzt. Anschließend wurde das erhaltene Material bei einer Temperatur von etwa 180°C an Luft getrocknet.

Das so hergestellte Material wurde dann verschiedenen Tests unterzogen, um seine Eignung als Brandschutzmaterial und die bauphysikalischen Eigenschaften zu untersuchen. Die Ergebnisse sind in den folgenden Tabellen wiedergegeben.

**Wärmeleitfähigkeit nach thermischer Behandlung bei 900°C:**

| Temperatur in °C | | | Wärmeleitfähigkeit (W/mK) |
|---|---|---|---|
| Auf der warmen Seite | Auf der kalten Seite | Mittelwert | |
| 201 | 27 | 114 | 0,118 |
| 400 | 41 | 220 | 0,118 |
| 800 | 91 | 448 | 0,166 |

**Spezifische Wärme**

| | | | | | |
|---|---|---|---|---|---|
| Mittlere Temperatur (°C) | 65 | 209 | 320 | 427 | 483 |
| Spezifische Wärme J/kg K | 721 | 771 | 866 | 894 | 928 |

**Druckfestigkeit**

| T °C | Bei 5% Deformation MPa | Bis zur max. Zerstörung MPa |
|---|---|---|
| Bei Zimmertemperatur | 3,28 | 4,30 |
| Bei über 900°C | 2,42 | 4,57 |

**Biegefestigkeit**

| Temperaturen °C | MPa | Psi |
|---|---|---|
| Bei Zimmertemperatur | 1,48 | 215 |
| Bei über 900°C | 0,61 | 88 |

**Schraubentragfähigkeit**

| Temperaturen °C | Max. Belastung (kg) | Max. Belastung (kN) |
|---|---|---|
| Bei Zimmertemperatur | 32,7 | 0,32 |
| Nach 900°C | 30,4 | 0,30 |

### Wärmestoßfestigkeit

Das bei 1100°C getemperte Material "überlebte" einen Abkühlungstest in kaltem Wasser.

### Bestimmung des Wärmestoßwiderstandsparameters Rst

Rst Parameterwerte von 44,80°C/m² wurden bei dem Material, das bei 900° C behandelt wurde, erhalten.

**Elektrischer Widerstand**

| Plattenstärke in mm | MΩ |
|---|---|
| 0,5 mm | 20 |
| 10 mm | 200.000 |

**Elastizitätsmodul**

| Temperatur °C | 3Pa | Psi |
|---|---|---|
| Zimmertemperatur | 1,57 | 227650 |
| Bei über 900°C | 0,74 | 107300 |

**Schrumpfen nach 24 Stunden Erhitzen**

| Temperatur °C | Schrumpfung in % | | |
|---|---|---|---|
| | Nach Länge | Nach Breite | Nach Stärke |
| 600 | 1,40 | 1,97 | 0,94 |
| 800 | 3,43 | 2,89 | 2,55 |

Gesamte offene Porosität 80%

Es zeigte sich somit, dass das erhaltene erfindungsgemäße Material sich hervorragend als Brandschutzmaterial eignet und eine hervorragende mechanische Beständigkeit besitzt.

## Patentansprüche

1. Verfahren zur Herstellung eines hitzebeständigen Materials, umfassend die Schritte:
i) Bereitstellen eines wässrigen Gemischs, welches ein Alkalimetallsalz von Carboxymethylzellulose, SiO₂, Ca(OH)₂, Natriumsilikat und organische Fasern enthält, die ausgewählt sind aus Zellulose- und Holzfasern;
ii) Erhitzen des Gemischs für 10 bis 28 h, vorzugsweise 14 bis 24 h bei einem Druck von gesättigtem Wasserdampf von 11 bis 13 bar, vorzugsweise etwa 12 bar, auf eine Temperatur von 160 bis 250°C, vorzugsweise 180 bis 220°C;
iii) Trocknen des in ii) erhaltenen Materials bei einer Temperatur von höchstens 300°C, vorzugsweise 180 bis 200 °C,
worin Schritt i) die folgenden Schritte umfasst:
a) Bereitstellen eines Gemischs aus SiO₂ und Wasser,
b) Hinzufügen von, Ca(OH)₂, Natriumsilikat, einer wässrigen Lösung eines Alkalimetallsalzes von Carboxymethylzellulose und einer wässrigen Suspension von Zellulose- und/oder Holzfasern, und
c) Vermengen der Komponenten zu einem homogenen Gemisch,
und worin zu dem Gemisch von Schritt i) weiterhin Zement zugegeben wird, bevorzugt in einer Menge von 0,01 bis 10 Gew.-%, bevorzugt 0,01 bis 5 Gew.-%, weiter bevorzugt 0,1 bis 1 Gew.-%, bezogen auf die Gesamtmenge aller festen Bestandteile,
und worin dem Gemisch von Schritt i) weiterhin ein oder mehrere Salze wie etwa NaCl, MgCl₂ und/oder MgCO₃ zugegeben werden, bevorzugt in einer Menge von 0,1 bis 10 Gew.-%, bevorzugt 0,5 bis 8 Gew.-% oder 0,1 bis 5 Gew.-%, bezogen auf die Gesamtmenge aller festen Bestandteile.

2. Verfahren nach Anspruch 1, worin
- Ca(OH)₂ und SiO₂ in einer Menge zugegeben werden, die einem Verhältnis von CaO : SiO₂ von 0,3 bis 3, bevorzugt 0,5 bis 1,3, vorzugsweise etwa 0,65 bis 0,75, entspricht;
- Natriumsilikat in einer Menge von 0,1 bis 5 Gew.-%, bevorzugt 0,1 bis 1 Gew.-% zugegeben wird, bezogen auf die Gesamtmenge der festen Bestandteile;
- das Gemisch 0,1 bis 5 Gew.-%, bevorzugt 0,1 bis 1 Gew.-% vorzugsweise etwa 0,3 bis 0,8 Gew.-% eines Alkalimetallsalzes von Carboxymethylzellulose enthält, bezogen auf die Gesamtmenge aller festen Bestandteile;
- die organischen Fasern in einer Menge von 2,5 bis 7,5 Gew.-%, vorzugsweise etwa 3,5 bis 5,5 % zugegeben werden, bezogen auf die Gesamtmenge aller festen Bestandteile.

3. Verfahren nach einem der vorhergehenden Ansprüche, worin weiterhin NaOH zugegeben wird, vorzugsweise in einer Menge von 0,01 bis 0,3 Gew.-%, bezogen auf die Gesamtmenge aller festen Bestandteile.

4. Verfahren nach einem der vorhergehenden Ansprüche, worin in Schritt i) Natriumcarboxymethylzellulose verwendet wird.

5. Hitzebeständiges Material auf Grundlage von Calciumhydrosilikat, erhältlich durch ein Verfahren nach einem der Ansprüche 1 bis 4.

6. Material nach Anspruch 5, **dadurch gekennzeichnet, dass** es im Wesentlichen eine Tobermoritstruktur aufweist.

7. Material nach einem der Ansprüche 5 oder 6, **dadurch gekennzeichnet, dass** es bei Raumtemperatur eine Druckfestigkeit bei 5% Deformation von mindestens 8,0 MPa, bevorzugt mindestens 8,4 MPa besitzt und die Druckfestigkeit bis zur maximalen Zerstörung mindestens 10,0 MPa beträgt.

8. Material nach einem der Ansprüche 5 bis 7, **dadurch gekennzeichnet, dass** es bei Raumtemperatur eine Biegefestigkeit von mindestens 3,5 MPa, bevorzugt mindestens 3,9 MPa besitzt.

9. Material nach einem der Ansprüche 5 bis 8, **dadurch gekennzeichnet, dass** es in Form einer Beschichtung, als Block, Platten, Granulat oder in Pulverform vorliegt.

10. Verfahren zum Aufbringen einer hitzebeständigen Beschichtung, **dadurch gekennzeichnet, dass** ein Material nach einem der Ansprüche 5 bis 9 in partikulärem Zustand mit Wasser und Kleister vermischt und auf eine zu beschichtende Struktur aufgebracht wird.

11. Verfahren nach Anspruch 10, **dadurch gekennzeichnet, dass** als Kleister Natriumcarboxymethylzellulose, ggf. in Kombination mit einem wasserlöslichen Alkalisilikat verwendet wird.

12. Verfahren nach einem der Ansprüche 10 oder 11, **dadurch gekennzeichnet, dass** das Material auf eine Baustruktur, wie etwa Stahl- oder Betonträger, Rohre, Leitungs- oder Lüftungskanäle etc., aufgesprüht oder aufgestrichen wird.

13. Verwendung eines Materials nach einem der Ansprüche 5 bis 9 als Brandschutzmaterial und/oder zur Isolierung gegen Wärme, Schall, Vibrationen oder elektromagnetische Strahlung.

14. Verfahren nach einem der Ansprüche 1 bis 4, worin das wässrige Gemisch aus Schritt (i) in eine Form gegossen, in Schritt (ii) unter Wasserdampfdruck z. B. in einem Autoklaven erhitzt wird, und anschließend aus der Form entnommen wird.

## Claims

1. Method for producing a heat-resistant material, comprising the steps of:
i) providing an aqueous mixture containing an alkali metal salt of carboxymethylcellulose, SiO₂, Ca(OH)₂, sodium silicate and organic fibres selected from cellulose- and wood fibres;
ii) heating the mixture to a temperature of from 160 °C to 250 °C, preferably from 180 °C to 220 °C, for 10 to 28 hours, preferably 14 to 24 hours, at a pressure of saturated steam of from 11 to 13 bar, preferably approximately 12 bar;
iii) drying the material obtained in ii) at a temperature of at most 300 °C, preferably from 180 °C to 200 °C,
wherein step i) comprises the following steps of:
a) providing a mixture of SiO₂ and water,
b) adding Ca(OH)₂, sodium silicate, an aqueous solution of an alkali metal salt of carboxymethylcellulose and an aqueous suspension of cellulose- and/or wood fibres, and
c) mixing the components to give a homogeneous mixture,
and wherein cement is additionally added to the mixture from step i), preferably in an amount of from 0.01 to 10 wt.%, preferably 0.01 to 5 wt.%, most preferably 0.1 to 1 wt.%, based on the total amount of all solid constituents,
and wherein one or more salts, such as NaCl, MgCl₂ and/or MgCO₃, are additionally added to the mixture from step i), preferably in an amount of from 0.1 to 10 wt.%, preferably 0.5 to 8 wt.% or 0.1 to 5 wt.%, based on the total amount of all solid constituents.

2. Method according to claim 1, wherein
- Ca(OH)₂ and SiO₂ are added in an amount corresponding to a ratio of CaO:SiO₂ of from 0.3 to 3, preferably from 0.5 to 1.3, preferably from approximately 0.65 to 0.75;
- sodium silicate is added in an amount of from 0.1 to 5 wt.%, preferably from 0.1 to 1 wt.%, based on the total amount of the solid constituents;
- the mixture contains from 0.1 to 5 wt.%, preferably from 0.1 to 1 wt.%, preferably from approximately 0.3 to 0.8 wt.%, of an alkali metal salt of carboxymethylcellulose, based on the total amount of all solid constituents;
- the organic fibres are added in an amount of from 2.5 to 7.5 wt.%, preferably from approximately 3.5 to 5.5 wt.%, based on the total amount of all solid constituents.

3. Method according any of the preceding claims, wherein NaOH is additionally added, preferably in an amount of from 0.01 to 0.3 wt.%, based on the total amount of all solid constituents.

4. Method according to any of the preceding claims, wherein sodium carboxymethylcellulose is used in step i).

5. Heat-resistant material which is based on calcium hydrosilicate and can be obtained by a method according to any of claims 1 to 4.

6. Material according to claim 5, **characterised in that** it essentially has a tobermorite structure.

7. Material according to either claim 5 or claim 6, **characterised in that** at room temperature it has a compressive strength at 5 % deformation of at least 8.0 MPa, preferably at least 8.4 MPa, and the compressive strength up to maximum destruction is at least 10.0 MPa.

8. Material according to any of claims 5 to 7, **characterised in that** at room temperature it has a flexural strength of at least 3.5 MPa, preferably at least 3.9 MPa.

9. Material according to any of claims 5 to 8, **characterised in that** it is present in the form of a coating, as a block, boards, granules or in powder form.

10. Method for applying a heat-resistant coating, **characterised in that** a material according to any of claims 5 to 9 in a particulate state is mixed with water and paste and applied to a structure to be coated.

11. Method according to claim 10, **characterised in that** sodium carboxymethylcellulose, if appropriate in combination with a water-soluble alkali silicate, is used as paste.

12. Method according to either claim 10 or claim 11, **characterised in that** the material is either sprayed or painted onto a construction element such as a steel- or concrete support, pipes, ducts or ventilation channels, etc.

13. Use of a material according to any of claims 5 to 9 as fire protection material and/or for insulation against heat, sound, vibrations or electromagnetic radiation.

14. Method according to any of claims 1 to 4, wherein the aqueous mixture from step i) is poured into a mould, heated under steam pressure, for example in an autoclave, in step ii), and subsequently removed from the mould.

## Revendications

1. Procédé de fabrication d'un matériau réfractaire comprenant les étapes suivantes:
i) préparation d'un mélange aqueux, qui contient un sel de métal alcalin de carboxyméthylcellulose, du SiO₂, du Ca(OH)₂, du silicate de sodium et des fibres organiques, qui sont choisies parmi les fibres de cellulose et les fibres de bois;
ii) chauffage du mélange pendant 10 à 28 h, de préférence pendant 14 à 24 h à une pression de vapeur d'eau saturée de 11 à 13 bar, de préférence d'environ 12 bar, à une température de 160 à 250 °C, de préférence de 180 à 220 °C;
iii) séchage du matériau obtenu à l'étape ii) à une température de 300 °C au maximum, de préférence de 180 à 200°C,
dans lequel l'étape i) comprend les sous-étapes suivantes:
a) préparation d'un mélange de SiO₂ et d'eau,
b) ajout de Ca(OH)₂, de silicate de sodium, d'une solution aqueuse d'un sel de métal alcalin de carboxyméthylcellulose et d'une suspension aqueuse de fibres de cellulose et/ou de fibres de bois, et
c) mélange des composants en un mélange homogène,
et dans lequel le mélange de l'étape i) est en outre additionné de ciment, de préférence dans une proportion de 0,01 à 10 % en poids, de préférence de 0,01 à 5 % en poids, avec une plus grande préférence de 0,1 à 1 % en poids par rapport à la quantité totale de tous les ingrédients solides,
et dans lequel le mélange de l'étape i) est en outre additionné d'un ou de plusieurs sels tels que du NaCl, du MgCl₂ et/ou du MgCO₃, de préférence dans une proportion de 0,1 à 10 % en poids, de préférence de 0,5 à 8 % en poids ou de 0,1 à 5 % en poids, par rapport à la quantité totale de tous les ingrédients solides

2. Procédé selon la revendication 1, dans lequel
- le Ca(OH)₂ et le SiO₂ sont ajoutés dans une proportion qui correspond à un rapport entre le CaO et le SiO₂ de 0,3 à 3, de préférence de 0,5 à 1,3, de préférence d'environ 0,65 à 0,75:
- le silicate de sodium est ajouté dans une proportion de 0,1 à 5 % en poids, de préférence de 0,1 à 1 % en poids, par rapport à la quantité totale des ingrédients solides;
- le mélange contient 0,1 à 5 % en poids, de préférence 0,1 à 1 %, de préférence environ 0,3 à 0,8 % en poids d'un sel de métal alcalin de carboxyméthylcellulose, par rapport à la quantité totale de tous les ingrédients solides;
- les fibres organiques sont ajoutées dans une proportion de 2,5 à 7,5 % en poids, de préférence d'environ 3,5 à 5,5 % en poids par rapport à la quantité totale de tous les ingrédients solides.

3. Procédé selon l'une des revendications précédentes, dans lequel du NaOH est ajouté en outre, de préférence dans une proportion de 0,01 à 0,3 % en poids par rapport à la quantité totale de tous les ingrédients solides.

4. Procédé selon l'une des revendications précédentes, dans lequel on utilise de la carboxyméthylcellulose de sodium dans l'étape i).

5. Matériau réfractaire à base d'hydrosilicate de calcium, pouvant être obtenu par un procédé selon l'une des revendications 1 à 4.

6. Matériau selon la revendication 5, **caractérisé en ce qu'**il présente essentiellement une structure de tobermorite.

7. Matériau selon l'une des revendications 5 ou 6, **caractérisé en ce qu'**il possède à température ambiante une résistance à la compression, à une déformation de 5 %, d'au moins 8,0 MPa, de préférence d'au moins 8,4 MPa et que la résistance à la compression jusqu'à la destruction maximale atteint au moins 10,0 MPa.

8. Matériau selon l'une des revendications 5 à 7, **caractérisé en ce qu'**il possède à température ambiante une résistance à la flexion d'au moins 3,5 MPa, de préférence d'au moins 3,9 MPa.

9. Matériau selon l'une des revendications 5 à 8, **caractérisé en ce qu'**il existe sous forme d'enduction, de bloc, de plaques, de granulé ou de poudre.

10. Procédé d'application d'une enduction réfractaire, **caractérisé en ce qu'**un matériau selon l'une des revendications 5 à 9 est mélangé sous forme particulaire avec de l'eau et de la colle de pâte et appliqué sur une structure à enduire.

11. Procédé selon la revendication 10, caractérisé en que l'on utilise comme colle de pâte, de la carboxyméthylcellulose de sodium, le cas échéant en association avec un silicate de métal alcalin soluble dans l'eau.

12. Procédé selon l'une des revendications 10 ou 11, **caractérisé en ce que** le matériau est pulvérisé ou enduit sur des structures de construction, telles que des poutrelles en acier ou en béton, des tuyaux, des caniveaux ou des conduits d'aération, etc.

13. Utilisation d'un matériau selon l'une des revendications 5 à 9, comme matériau coupe-feu et/ou pour l'isolation contre la chaleur, le son, les vibrations ou le rayonnement électromagnétique.

14. Procédé selon l'une des revendications 1 à 4, dans lequel le mélange aqueux de l'étape i) est coulé dans un moule, chauffé dans l'étape ii) sous une pression de vapeur d'eau, par exemple dans un autoclave, et ensuite retiré du moule.
